# DEMANDE DE BREVET EUROPEEN

(11) **EP 2 717 071 A1**
(43) Date de publication de la demande: **09.04.2014**
(21) Numéro de dépôt: 13187400.0
(22) Date de dépôt: 04.10.2013
(51) Int. Cl.: G01S 19/20, G01S 19/33

(54) **Centrale intertielle mettant en oeuvre une navigation hybride par couplage lâche intègre**

(30) Priorité: 05.10.2012 FR 1202667
(71) Demandeur: Sagem Défense Sécurité, 92100 Boulogne-Billancourt (FR)
(72) Inventeur: Davain, Loïc, 75015 PARIS (FR)
(74) Mandataire: Regimbeau

(57) **Abrégé**

L'invention concerne une centrale inertielle (1) mettant en oeuvre une hybridation en couplage lâche de mesures inertielles en exploitant des mesures fournies par un récepteur de positionnement par satellites (2) qui utilise les signaux émis par une pluralité de satellites répartis en au moins deux sous-ensembles disjoints de satellites (5a, 5b, 5c) et calcule au moins deux solutions de navigation, chaque solution de navigation étant calculée à l'aide des signaux émis par les satellites de l'un des sous-ensembles (5a, 5b, 5c),
la centrale inertielle (1) comportant un module d'hybridation (3) utilisant chacune desdites au moins deux solutions de navigation calculées par le récepteur de positionnement par satellite (2) pour calculer des solutions de navigation hybrides, et étant caractérisée en ce qu'elle comporte un détecteur de panne satellite (4) configuré pour comparer lesdites solutions de navigation hybrides et détecter le cas échéant une incohérence entre lesdites solutions de navigation hybrides, ladite incohérence étant synonyme d'une panne d'un satellite appartenant à l'un des sous-ensembles, le module d'hybridation (4) étant en outre configuré pour stopper la mise en oeuvre de l'hybridation suite à la détection d'une incohérence entre lesdites solutions de navigation hybrides quand l'origine de l'incohérence ne peut être déterminée.

## Description

### DOMAINE DE L'INVENTION

Le domaine de l'invention est celui des centrales inertielles réalisant une hybridation de la navigation inertielle en exploitant les signaux émis par une pluralité de satellites répartis en au moins deux sous-ensembles disjoints de satellites, typiquement mais non limitativement les récepteurs GNSS (« Global Navigation Satellite System ») multi-constellation. L'invention concerne plus particulièrement de telles centrales inertielles mettant en oeuvre une hybridation de la navigation par couplage lâche, et porte sur la réalisation de l'hybridation avec une protection au sens de l'intégrité des données en sortie.

### ARRIERE PLAN DE L'INVENTION

On connaît de la demande de brevet WO 2010/070012 A1 une solution pour assurer l'intégrité de la navigation d'un système utilisant un récepteur GNSS pour la mise en oeuvre d'une hybridation en couplage serré. Cette solution repose sur un banc de filtres de Kalman et l'utilisation des mesures brutes fournies par le récepteur GNSS, typiquement les pseudo-distances entre le récepteur et chaque satellite d'une constellation. Le document "A new failure detection approach and its application to GPS autonomous integrity monitoring", par Ren Da et al., IEEE transactions on aerospace and electronic systems, vol. 31, no.1, 1 er janvier 1995, présente également une approche similaire.

Cette solution nécessite d'avoir accès à l'ensemble des mesures GNSS. Or certains récepteurs GNSS ne permettent pas d'avoir accès à ces mesures (notamment les pseudo-distances) et ne fournissent que la solution de navigation du récepteur (position, vitesse, temps).

Cette solution présente en outre l'inconvénient de nécessiter un nombre élevé de filtres de Kalman (typiquement 12 pour une constellation de satellites). Or certaines centrales inertielles ne disposent pas de processeurs suffisamment puissants pour mettre en oeuvre une telle batterie de filtres.

Enfin cette solution ne prend en considération qu'une seule constellation de satellites, alors même que certains récepteurs exploitent les signaux issus de satellites appartenant à plusieurs constellations (GPS, Glonass, et prochainement Galileo, Compass ...).

Il existe ainsi un besoin pour une solution alternative qui puisse permettre d'assurer l'intégrité de la navigation hybride d'un système multi-constellation en couplage lâche et qui avantageusement puisse être mise en oeuvre au moyen d'un nombre limité de filtres de Kalman afin d'être implémentée sur des processeurs de moindre capacité.

### EXPOSÉ DE L'INVENTION

L'invention a pour objectif de répondre à ce besoin et propose à cet effet selon un premier aspect une centrale inertielle mettant en oeuvre une hybridation en couplage lâche de mesures inertielles en exploitant des mesures fournies par un récepteur de positionnement par satellites qui utilise les signaux émis par une pluralité de satellites répartis en au moins deux sous-ensembles disjoints de satellites et calcule au moins deux solutions de navigation, chaque solution de navigation étant calculée à l'aide des signaux émis par les satellites de l'un des sous-ensembles, la centrale inertielle comportant un module d'hybridation utilisant chacune desdites au moins deux solutions de navigation calculées par le récepteur de positionnement par satellite pour calculer des solutions de navigation hybrides,
la centrale inertielle étant **caractérisée en ce qu'**elle comporte un détecteur de panne satellite configuré pour comparer lesdites solutions de navigation hybrides et détecter le cas échéant une incohérence entre lesdites solutions de navigation hybrides, ladite incohérence étant synonyme d'une panne d'un satellite appartenant à l'un des sous-ensembles, et en ce que le module d'hybridation est en outre configuré pour stopper la mise en oeuvre de l'hybridation suite à la détection d'une incohérence entre lesdites solutions de navigation hybrides.

Certains aspects préférés, mais non limitatifs, de cette centrale inertielle hybride sont les suivants :
- la centrale inertielle exploite les informations fournies par un module appartenant au récepteur de positionnement par satellites de surveillance d'intégrité de récepteur apte à identifier et exclure le satellite en panne ;
- les satellites étant répartis en deux sous-ensembles disjoints de satellites, le module d'hybridation est en outre configuré pour reprendre la mise en oeuvre de l'hybridation une fois le satellite en panne identifié et exclu ;
- les satellites étant répartis en au moins trois sous-ensembles disjoints de satellites, le détecteur de panne satellite est configuré pour identifier le sous-ensemble auquel appartient le satellite en panne, le module d'hybridation est configuré pour mettre en oeuvre l'hybridation en utilisant les solutions de navigation calculées par le récepteur de positionnement par satellites à l'aide des signaux émis par les satellites des sous-ensembles auxquels n'appartient pas le satellite en panne avant que le satellite en panne ne soit identifié et exclu et pour reprendre la mise en oeuvre de l'hybridation avec l'ensemble des solutions de navigation calculées par le récepteur de positionnement par satellites une fois le satellite en panne identifié et exclu ;
- le détecteur de panne satellites comprend un banc de filtres de Kalman constitué d'un filtre de Kalman principal recevant une solution de navigation mixte élaborée par le récepteur de positionnement par satellites à l'aide des signaux émis par l'ensemble des satellites et n filtres de Kalman secondaires recevant chacun la solution de navigation calculée par le récepteur de positionnement par satellites à l'aide des signaux émis par les satellites de l'un des sous-ensembles ;
- le détecteur de panne satellites comprend un banc de filtres de Kalman constitué d'un filtre de Kalman principal recevant l'ensemble des solutions de navigation calculées par le récepteur de positionnement par satellites et n filtres de Kalman secondaires recevant chacun l'ensemble des solutions de navigation calculées par le récepteur de positionnement par satellites à l'exclusion de la solution de navigation calculée à l'aide des signaux émis par les satellites de l'un des sous-ensemble ;
- les satellites appartiennent à plusieurs constellations de satellites ;
- chaque sous-ensemble de satellites correspond à l'une des constellations.

Selon un second aspect, l'invention concerne un système de positionnement comportant une centrale inertielle selon l'invention et un récepteur de positionnement par satellites qui utilise les signaux émis par une pluralité de satellites répartis en au moins deux sous-ensembles disjoints de satellites et calcule au moins deux solutions de navigation.

Selon un troisième aspect, l'invention concerne un procédé d'hybridation en couplage lâche de mesures inertielles exploitant des mesures fournies par un récepteur de positionnement par satellites qui utilise les signaux émis par une pluralité de satellites répartis en au moins deux sous-ensembles disjoints de satellites et calcule au moins deux solutions de navigation, chaque solution de navigation étant calculée à l'aide des signaux émis par les satellites de l'un des sous-ensembles, dans lequel l'hybridation fournit des solutions de navigation hydrides correspondant au résultat de l'hybridation en couplage lâche utilisant chacune desdites au moins deux solutions de navigation,
caractérisé par la mise en oeuvre d'une comparaison desdites solutions de navigation hybrides pour détecter le cas échéant une incohérence entre lesdites solutions de navigation hybrides, ladite incohérence étant synonyme d'une panne d'un satellite appartenant à l'un des sous-ensembles, et par l'arrêt de l'hybridation suite à la détection d'une incohérence entre lesdites solutions de navigation hybrides.

### PRESENTATION DES FIGURES

D'autres aspects, buts et avantages de la présente invention apparaîtront mieux à la lecture de la description détaillée suivante de formes de réalisation préférées de celle-ci, donnée à titre d'exemple non limitatif, et faite en référence aux figures annexées, parmi lesquelles
- la figure 1 représente un système de positionnement comprenant une centrale inertielle selon un mode réalisation possible de l'invention;
- la figure 2 représente un procédé d'hybridation selon un mode de réalisation possible de l'invention.

### DESCRIPTION DETAILLEE DE L'INVENTION

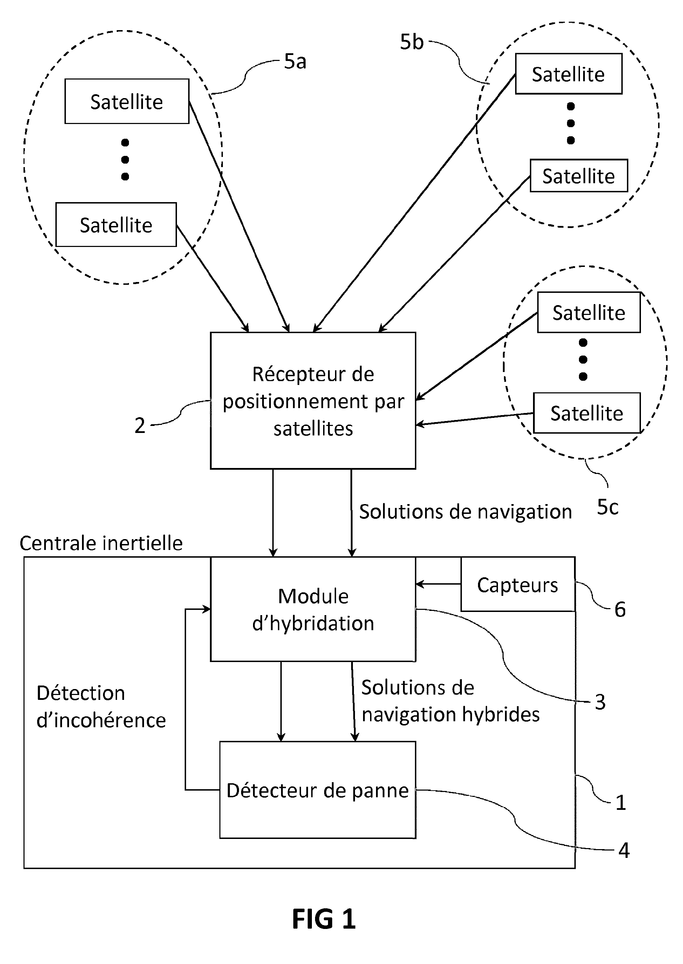

Selon son premier aspect et en référence à la figure 1, l'invention concerne une centrale inertielle 1 mettant en oeuvre une hybridation en couplage lâche de mesures inertielles en exploitant des mesures fournies par un récepteur de positionnement par satellites 2 (récepteur GNSS par la suite) qui utilise les signaux émis par une pluralité de satellites répartis en au moins deux sous-ensembles disjoints 5a, 5b, 5c de satellites. Dans une implémentation privilégiée qui sera prise en exemple par la suite, chaque sous-ensemble 5a, 5b, 5c correspond à une constellation de satellites (GPS, Glonass, prochainement Galileo). L'invention n'est toutefois pas limitée à cette implémentation privilégiée mais s'étend à des sous-ensembles pouvant être constitués par certains satellites d'une constellation uniquement, ou encore par des satellites appartenant à plusieurs constellations. La seule limitation tient au nombre de satellites par sous-ensemble 5a, 5b, 5c qui doit être au moins de 4 pour pouvoir permettre le calcul d'une position du récepteur sur la base des signaux émis par les satellites du sous-ensemble 5a, 5b, 5c. Considérant deux sous-ensembles 5a, 5b disjoints de satellites, on calcule ainsi deux positions du récepteur 2 qui sont indépendantes l'une de l'autre. Chaque satellite appartient préférentiellement à un seul sous-ensemble 5a, 5b, 5c afin de statistiquement garantir cette indépendance.

Le récepteur GNSS 2 comporte un calculateur de navigation configuré pour calculer au moins deux solutions de navigation (données de position, vitesse et temps : résumées par l'acronyme PVT), chaque solution de navigation étant calculée à l'aide des signaux émis par les satellites de l'un des sous-ensembles. Prenant l'exemple d'un récepteur GNSS multi-constellation GPS, Glonass et Galileo, on dispose ainsi des informations suivantes : solution PVT GPS, solution PVT Glonass, solution PVT Galileo.

La centrale inertielle 1 comporte par ailleurs un module d'hybridation 3 utilisant lesdites au moins deux solutions de navigation issues du récepteur GNSS 2 pour mettre en oeuvre une hybridation de la navigation par couplage lâche. Ainsi, le module d'hybridation 3 utilise chacune des au moins deux solutions de navigation issues du récepteur GNSS 2 pour hybrider les mesures inertielles issues de capteurs 6 et ainsi calculer au moins deux solutions de navigation hybrides.

On fera par la suite référence à une hybridation par couplage lâche de position. L'invention n'est toutefois pas limitée à ce mode de couplage lâche, mais s'étend également à un couplage lâche exploitant l'une et/ou l'autre des données PVT (comme par exemple un couplage lâche en position et vitesse).

D'une manière générale, l'invention propose d'analyser l'écart entre chacune des solutions de navigation hybrides issues du module d'hybridation 2 et qui sont théoriquement cohérentes et indépendantes. Si l'une des solutions de navigation hybrides s'écarte des autres, il y a donc de fortes probabilités que cette solution de navigation hybride subisse une panne, c'est-à-dire que l'un des satellites appartenant au sous-ensemble de satellites 5a, 5b, 5c pris en considération par le récepteur GNSS 2 pour le calcul de la solution de navigation servant à cette navigation hybride subisse une panne.

Dans le cadre de l'invention, la centrale inertielle 1 dispose d'un détecteur de panne satellite 4 configuré pour comparer les solutions de navigation hybrides et détecter le cas échéant une incohérence entre lesdites solutions de navigation hybrides, cette incohérence étant synonyme d'une panne d'un satellite appartenant à l'un des sous-ensembles 5a, 5b, 5c. Le module d'hybridation est alors configuré pour stopper la mise en oeuvre de l'hybridation suite à la détection d'une incohérence entre lesdites solutions de navigation hybrides.

Dans un premier cas de figure, les satellites sont répartis en deux sous-ensembles disjoints de satellites 5a, 5b (c'est par exemple le cas pour un récepteur GNSS bi-constellation GPS/Glonass où chaque constellation forme un sous-ensemble). Si l'écart entre les deux solutions de navigation hybrides dépasse un seuil, le détecteur de panne 4 satellite va déduire qu'il existe une panne. Il n'est toutefois pas possible de d'isoler le sous-ensemble de satellites 5a, 5b affecté par la panne, de sorte que l'on vient alors invalider les deux solutions de navigation.

Dans un second cas de figure, les satellites sont répartis en au moins trois sous-ensembles disjoints de satellites 5a, 5b, 5c (c'est par exemple le cas pour un récepteur GNSS tri-constellation GPS/Glonass/Galileo où chaque constellation forme un sous-ensemble). Si l'un des écarts entre les solutions de navigation hybrides dépasse un seuil, le détecteur de panne satellite 4 va déduire qu'il existe une panne et pouvoir identifier quel est le sous-ensemble de satellites 5a, 5b, 5c affecté par la panne (en effet, le seul sous-ensemble affecté par la panne va fournir une solution de navigation incohérente par rapport aux deux autres sous-ensembles). Ce sous-ensemble de satellites est alors exclu, et l'hybridation est reprise en exploitant les solutions de navigation calculées par le récepteur GNSS 2 sur la base des sous-ensembles de satellites non exclus (deux positions au lieu de trois dans l'exemple).

Dans l'un et l'autre de ces cas de figure, l'invention propose de plus que la centrale inertielle 1 exploite les informations fournies par un module classiquement mise en oeuvre dans un récepteur GNSS de surveillance autonome d'intégrité de récepteur (RAIM pour « Receiver Autonomous Integrity Monitoring ») afin d'identifier et d'exclure (au niveau récepteur) le satellite en panne. Une fois le satellite en panne exclu, l'hybridation est reprise en exploitant l'ensemble des solutions de navigation calculées par le récepteur GNSS 2 (après vérification de la cohérence de la position corrigée par rapport aux autres positions).

La différence entre les deux cas de figure exposés ci-dessus tient donc au fait que dans le deuxième cas de figure l'hybridation n'est pas interrompue pendant l'attente de l'exclusion RAIM, mais simplement dégradée pour exploiter un nombre réduit de solutions de navigation.

On décrit ci-après deux modes de réalisation possibles du détecteur de panne satellite 4.

Selon un premier mode de réalisation, le détecteur de panne 4 satellite comprend un banc de filtres de Kalman constitué d'un filtre de Kalman principal recevant une solution de navigation mixte élaborée par le récepteur GNSS à partir de l'ensemble des pseudo-distances à sa disposition et n filtres de Kalman secondaires recevant chacun la solution de navigation calculée par le récepteur GNSS 2 à l'aide des signaux émis par les satellites de l'un des sous-ensembles 5a, 5b, 5c. Reprenant l'exemple du récepteur tri-constellation, le détecteur de panne satellite comporte un filtre de Kalman principal recevant une solution GNSS unique obtenue à partir de l'ensemble des pseudo-distances des satellites visibles des trois constellations et trois filtres de Kalman secondaires recevant chacun l'une des informations suivantes : Solution GPS, Solution Glonass, Solution Galileo.

En l'absence de panne satellite, les solutions de navigation hybrides élaborées par les filtres forment globalement un nuage de points homogène. En présence d'une panne satellite, la solution de navigation calculée par le récepteur GNSS 2 en exploitant les signaux issus des satellites du sous-ensemble auquel appartient le satellite en panne dérive lentement. Ceci ne va polluer qu'un seul des filtres secondaires, de sorte que la solution de navigation hybride élaborée par ce filtre secondaire va s'écarter des autres solutions de navigation hybrides (un point se dégage du nuage de points) jusqu'à dériver à tel point que l'on puisse détecter une contradiction entre les solutions de navigations hybrides des filtres non pollués et du filtre pollué. Le filtre de Kalman principal sert à fournir la navigation « performante » en l'absence de panne. En cas de panne, ce filtre est reconfiguré à partir des solutions de navigation GNSS validées par le détecteur de panne.

Selon un second mode de réalisation le détecteur de panne satellite 4 comprend un banc de filtres de Kalman constitué d'un filtre de Kalman principal recevant l'ensemble des solutions de navigation calculées par le récepteur GNSS 2 et n filtres de Kalman secondaires recevant chacun l'ensemble des solutions de navigation calculées par le récepteur GNSS 2 à l'exclusion de la solution de navigation calculée par le récepteur GNSS 2 à partir des signaux émis par les satellites de l'un des sous-ensembles 5a, 5b, 5c. Reprenant l'exemple du récepteur GNSS tri-constellation, le filtre de Kalman principal reçoit les trois informations Solution GPS, Solution Glonass, Solution Galileo, tandis que les trois filtres de Kalman secondaires reçoivent respectivement les deux informations suivantes : Solution GPS et Solution Glonass pour le premier ; Solution GPS et Solution Galileo pour le second ; Solution Glonass et Solution Galileo pour le troisième.

En l'absence de panne satellite, les solutions de navigations hybrides élaborées par les filtres forment globalement un nuage de points homogène. En présence d'une panne satellite (par exemple GPS), la solution de navigation hybride (Glonass et Galileo) calculée en n'exploitant pas les signaux issus des satellites du sous-ensemble auquel appartient le satellite en panne dérive lentement. En parallèle, la solution GPS va polluer les autres filtres secondaires et le filtre principal (à savoir dans l'exemple, les filtres secondaires GPS et Galileo et GPS et Glonass). Ainsi l'ensemble des points divergent, à l'exception du point correspondant au filtre secondaire non affecté par la panne. On détecte ainsi une contradiction entre la solution de navigation hybride du filtre non pollué et celles des filtres pollués. Le filtre principal se reconfigure par recopie du filtre secondaire qui a été mis en évidence.

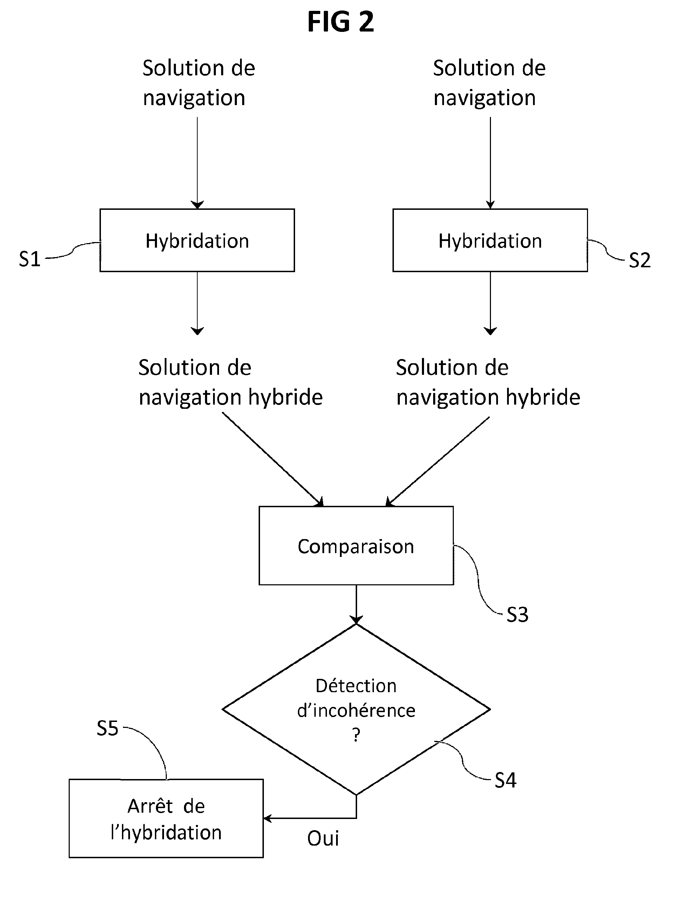

En référence à la figure 2, on aura compris que l'invention n'est pas limitée à la centrale de navigation selon son premier aspect, mais s'étend également à un procédé d'hybridation en couplage lâche de mesures inertielles exploitant des mesures fournies par un récepteur de positionnement par satellites 2 qui utilise les signaux émis par une pluralité de satellites répartis en au moins deux sous-ensembles disjoints de satellites 5a, 5b, 5c et calcule au moins deux solutions de navigation, chaque solution de navigation étant calculée à l'aide des signaux émis par les satellites de l'un des sous-ensembles 5a, 5b, 5c, dans lequel l'hybridation S1, S2 fournit des solutions de navigation hydrides correspondant au résultat de l'hybridation S1, S2 en couplage lâche utilisant chacune desdites au moins deux solutions de navigation, caractérisé par la mise en oeuvre d'une comparaison S3 desdites solutions de navigation hybrides pour détecter le cas échéant une incohérence S4 entre lesdites solutions de navigation hybrides, ladite incohérence étant synonyme d'une panne d'un satellite appartenant à l'un des sous-ensembles 5a, 5b, 5c, et par l'arrêt de l'hybridation S5 suite à la détection d'une incohérence entre lesdites solutions de navigation hybrides.

Dans le cas où au moins trois sous-ensembles de satellites 5a, 5b, 5c sont utilisés, suite à la détection d'une panne satellite, l'arrêt de l'hybridation S5 peut être limité au temps nécessaire pour identifier et exclure le sous-ensemble 5a, 5b, 5c affecté par la panne. L'hybridation S1, S2 est alors reprise en exploitant les solutions de navigation (positions notamment) calculées par le récepteur GNSS pour les sous-ensembles non affectés par la panne. Une analyse RAIM peut être mise en oeuvre pour identifier et exclure au niveau récepteur GNSS 2 le satellite en panne. Une fois celui-ci exclu, l'hybridation 5a, 5b, 5c peut reprendre avec l'ensemble des solutions de navigation calculées par le récepteur GNSS 2.

Dans le cas où deux sous-ensembles de satellites 5a, 5b sont utilisés, l'hybridation ne reprend qu'après que l'analyse RAIM a permis d'identifier et d'exclure le satellite en panne.

L'invention s'étend par ailleurs à un système de positionnement comportant une centrale inertielle 1 selon son premier aspect et un récepteur de positionnement 2 par satellites qui utilise les signaux émis par une pluralité de satellites répartis en au moins deux sous-ensembles disjoints 5a, 5b, 5c de satellites et calcule au moins deux solutions de navigation, chaque solution de navigation étant calculée à l'aide des signaux émis par les satellites de l'un des sous-ensembles 5a, 5b, 5c .

## Revendications

1. Centrale inertielle (1) mettant en oeuvre une hybridation en couplage lâche de mesures inertielles en exploitant des mesures fournies par un récepteur de positionnement (2) par satellites qui utilise les signaux émis par une pluralité de satellites répartis en au moins deux sous-ensembles disjoints de satellites (5a, 5b, 5c) et calcule au moins deux solutions de navigation, chaque solution de navigation étant calculée à l'aide des signaux émis par les satellites de l'un des sous-ensembles (5a, 5b, 5c) ,
la centrale inertielle (1) comportant un module d'hybridation (3) utilisant chacune desdites au moins deux solutions de navigation calculées par le récepteur de positionnement par satellite pour calculer des solutions de navigation hybrides,
la centrale inertielle (1) étant **caractérisée en ce qu'**elle comporte un détecteur de panne satellite (4) configuré pour comparer lesdites solutions de navigation hybrides et détecter le cas échéant une incohérence entre lesdites solutions de navigation hybrides, ladite incohérence étant synonyme d'une panne d'un satellite appartenant à l'un des sous-ensembles (5a, 5b, 5c), et **en ce que** le module d'hybridation (3) est en outre configuré pour stopper la mise en oeuvre de l'hybridation suite à la détection d'une incohérence entre lesdites solutions de navigation hybrides.

2. Centrale inertielle (1) selon la revendication 1, exploitant les informations fournies par un module appartenant au récepteur de positionnement par satellites de surveillance d'intégrité de récepteur apte à identifier et exclure le satellite en panne

3. Centrale inertielle (1) selon la revendication 2 pour laquelle les satellites sont répartis en deux sous-ensembles disjoints de satellites (5a, 5b, 5c), **caractérisée en ce que** le module d'hybridation (3) est en outre configuré pour reprendre la mise en oeuvre de l'hybridation une fois le satellite en panne identifié et exclu.

4. Centrale inertielle (1) selon la revendication 2 pour laquelle les satellites sont répartis en au moins trois sous-ensembles disjoints de satellites (5a, 5b, 5c), **caractérisée en ce que** le détecteur de panne satellite (4) est configuré pour identifier le sous-ensemble auquel appartient le satellite en panne, le module d'hybridation (3) est configuré pour mettre en oeuvre l'hybridation en utilisant les solutions de navigation calculées par le récepteur de positionnement (2) par satellites à l'aide des signaux émis par les satellites des sous-ensembles auxquels n'appartient pas le satellite en panne avant que le satellite en panne ne soit identifié et exclu et pour reprendre la mise en oeuvre de l'hybridation avec l'ensemble des solutions de navigation calculées par le récepteur de positionnement par satellites (2) une fois le satellite en panne identifié et exclu.

5. Centrale inertielle (1) selon l'une des revendications 1 à 4, dans laquelle le détecteur de panne satellites (4) comprend un banc de filtres de Kalman constitué d'un filtre de Kalman principal recevant une solution de navigation mixte élaborée par le récepteur de positionnement par satellites (2) à l'aide des signaux émis par l'ensemble des satellites et n filtres de Kalman secondaires recevant chacun la solution de navigation calculée par le récepteur de positionnement par satellites (2) à l'aide des signaux émis par les satellites de l'un des sous-ensembles (5a, 5b, 5c).

6. Centrale inertielle (1) selon l'une des revendications 1 à 4, dans laquelle le détecteur de panne satellites (4) comprend un banc de filtres de Kalman constitué d'un filtre de Kalman principal recevant l'ensemble des solutions de navigation calculées par le récepteur de positionnement par satellites (2) et n filtres de Kalman secondaires recevant chacun l'ensemble des solutions de navigation calculées par le récepteur de positionnement par satellites (2) à l'exclusion de la solution de navigation calculée à l'aide des signaux émis par les satellites de l'un des sous-ensembles (5a, 5b, 5c).

7. Centrale inertielle (1) selon l'une des revendications 1 à 6 pour laquelle les satellites appartiennent à plusieurs constellations de satellites.

8. Centrale inertielle (1) selon la revendication 7, pour laquelle chaque sous-ensemble de satellites (5a, 5b, 5c) correspond à l'une des constellations.

9. Système de positionnement comportant une centrale inertielle (1) selon l'une des revendications précédentes et un récepteur de positionnement par satellites (2) qui utilise les signaux émis par une pluralité de satellites répartis en au moins deux sous-ensembles disjoints de satellites (5a, 5b, 5c) et calcule au moins deux solutions de navigation.

10. Procédé d'hybridation en couplage lâche de mesures inertielles exploitant des mesures fournies par un récepteur de positionnement par satellites (2) qui utilise les signaux émis par une pluralité de satellites répartis en au moins deux sous-ensembles disjoints de satellites (5a, 5b, 5c) et calcule au moins deux solutions de navigation, chaque solution de navigation étant calculée à l'aide des signaux émis par les satellites de l'un des sous-ensembles,
dans lequel l'hybridation (S1, S2) fournit des solutions de navigation hydrides correspondant au résultat de l'hybridation en couplage lâche utilisant chacune desdites au moins deux solutions de navigation,
**caractérisé par** la mise en oeuvre d'une comparaison (S3) desdites solutions de navigation hybrides pour détecter le cas échéant une incohérence (S4) entre lesdites solutions de navigation hybrides, ladite incohérence étant synonyme d'une panne d'un satellite appartenant à l'un des sous-ensembles (5a, 5b, 5c), et par l'arrêt de l'hybridation (S5) suite à la détection d'une incohérence entre lesdites solutions de navigation hybrides.
